(19) **Europäisches Patentamt / European Patent Office / Office européen des brevets**

(11) **EP 1 950 866 A1**

(12) **EUROPÄISCHE PATENTANMELDUNG**

(43) Veröffentlichungstag:
30.07.2008 Patentblatt 2008/31

(51) Int Cl.:
*H02K 3/40* (2006.01)　　*H02K 15/10* (2006.01)

(21) Anmeldenummer: 08100508.4

(22) Anmeldetag: 15.01.2008

(84) Benannte Vertragsstaaten:
AT BE BG CH CY CZ DE DK EE ES FI FR GB GR HR HU IE IS IT LI LT LU LV MC MT NL NO PL PT RO SE SI SK TR
Benannte Erstreckungsstaaten:
AL BA MK RS

(30) Priorität: 25.01.2007　CH 1222007

(71) Anmelder: Alstom Technology Ltd
5400 Baden (CH)

(72) Erfinder: Baumann, Thomas
5430, Wettingen (CH)

(54) **Verfahren zum Herstellen eines Leiterstabes einer rotierenden elektrischen Maschine sowie ein nach diesem Verfahren hergestellter Leiterstab**

(57)　Bei einem Verfahren zum Herstellen eines Leiterstabes (10) einer rotierenden elektrischen Maschine, welcher Leiterstab (10) einen von einer Isolation (12) der Dicke d umgebenen Leiter (11) mit rechteckigem Querschnitt umfasst, wird zur Ausbildung der Isolation ein Isolierband in Längsrichtung fortschreitend mehrfach spiralig um den Leiter (11) gewickelt.

Bei einem solchen Verfahren wird eine Vereinfachung der Herstellung ohne Nachteile bei den elektrischen Eigenschaften dadurch erreicht, dass das Isolierband bis zu einer ersten Teildicke in einer Schuppenwicklung um den Leiter (11) gewickelt wird, und dass das Isolierband über die erste Teildicke hinaus in einem von der Schuppenwicklung abweichenden zweiten Wickelverfahren um den Leiter (11) gewickelt wird.

Fig.1

EP 1 950 866 A1

**Beschreibung**

TECHNISCHES GEBIET

Die vorliegende Erfindung bezieht sich auf das Gebiet der rotierenden elektrischen Maschinen. Sie betrifft ein Verfahren zum Herstellen eines Leiterstabes einer rotierenden elektrischen Maschine sowie einen nach diesem Verfahren hergestellten Leiterstab.

STAND DER TECHNIK

Bei rotierenden elektrischen Maschinen hoher Leistung werden die zugehörigen Wicklungen durch in Nuten eines Blechkörpers eingelegte Leiterstäbe gebildet. Die Leiterstäbe haben einen zentralen metallischen Leiter (meist bestehend aus einer Vielzahl von Teilleitern aus gezogenem Cu-Draht mit überwiegend rechteckigem Querschnitt). Die Leiterstäbe weisen ebenfalls einen überwiegend rechteckigem Querschnitt auf und sind von einer Isolation bestimmter Dicke umgeben (siehe z.B. die Druckschriften DE-A1-198 11 370 oder EP-B1-1 319 266). Die Isolation wird häufig durch mehrfaches Umwickeln des Leiters mit einem Glas/Glimmerband aufgebaut, welches zum Entfernen von Lufteinschlüssen und zur Verfestigung mit Kunstharz imprägniert ist.

Die Glas/Glimmerbänder werden heutzutage fast ausschliesslich maschinell mittels spezieller Wickelroboter aufgebracht. Hierbei werden die Bandrollen in einem rotierenden Ring entlang der Längsrichtung des Stabes gefahren und das Band spiralig mit etwa 50% Überlappung in mehreren Lagen bis zum Erreichen der gewünschten Dicke aufgewickelt.

Man unterscheidet zwischen verschiedenen Wickelverfahren, die als "Schuppenwicklung" und "Kreuzwicklung" bezeichnet werden:

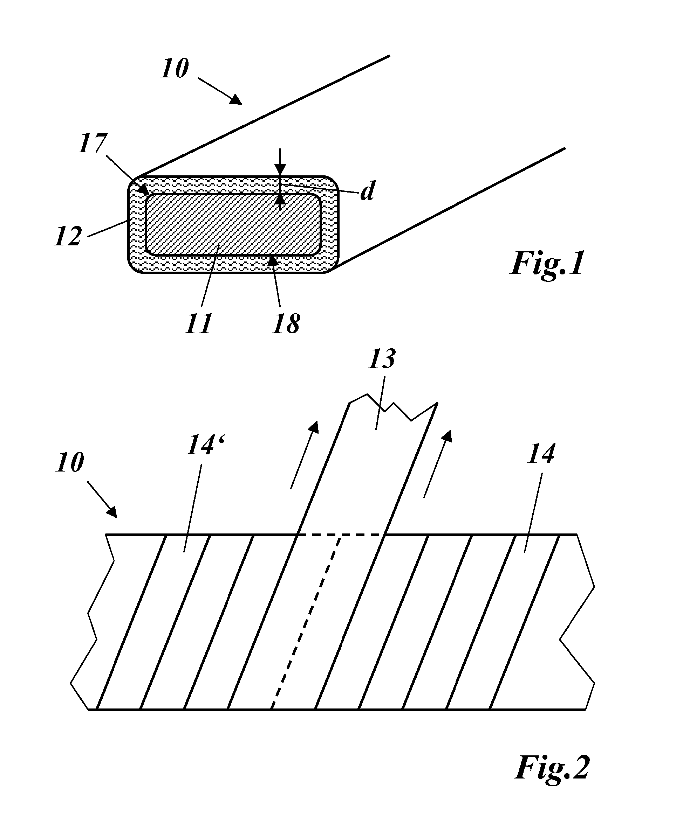

Schuppenwicklung: Gewickelt wird immer nur in einer Richtung (siehe Fig. 2). Alle Bandkanten verschiedener Bandlagen bzw. Wickellagen liegen parallel zueinander. Nachteilig ist dabei, dass nach Fertigstellung einer Lage der Wickelring "leer" zurückgefahren werden muss, was innerhalb des Herstellungsprozesses einen Zeitverlust bedeutet.

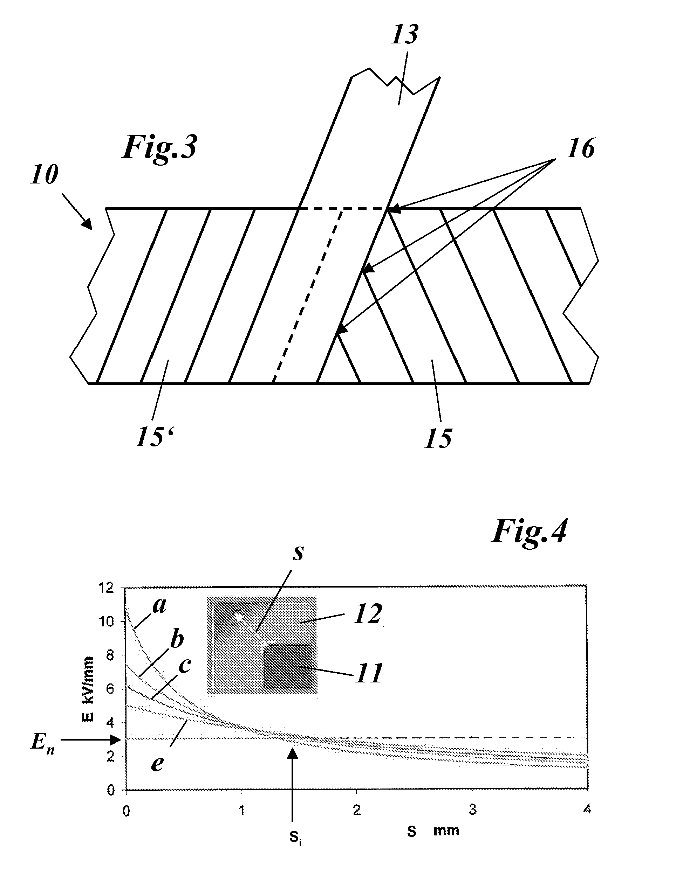

Kreuzwicklung: Gewickelt wird hier in wechselnden Richtungen vor und zurück (siehe Fig. 3). Dadurch kehrt sich die Ausrichtung der Kanten von Bändern zweier aufeinander folgender Lagen um (ähnlich wie bei einem Wundverband). Dies ist die heute fast ausschliesslich verwendete Wickelart. Nachteil der Kreuzwicklung ist, dass es ohne erheblichen Aufwand nicht zu verhindern ist, dass die Kreuzungspunkte zweier Bandlagen irgendwann mal auf einer Kante des Leiters zu liegen kommen.

Diese Kreuzungspunkte (16 in Fig. 3) sind als Schwachstellen in der Isolation zu betrachten: Sie bilden einen Kanal in Richtung des elektrischen Feldes und wenn dieser dann auch noch an einem Ort erhöhter Feldstärke liegt (wie es die Kante in der Nähe des Cu-Leiters eben ist), so ist das als "Sollbruchstelle" für elektrischen Durchschlag zu betrachten.

In der Tat konnte nachgewiesen werden, dass die Lebensdauer von kreuzgewickelter Isolation mit Kreuzungspunkten auf der Kante nur 25% von derjenigen einer Isolation mit Kreuzungspunkten auf der Breitseite beträgt. Für letztere ist die Lebensdauer etwa gleich lang wie bei der Schuppenwicklung.

DARSTELLUNG DER ERFINDUNG

Es ist daher Aufgabe der Erfindung, bei der Herstellung von Leiterstäben eine Wickelmethode vorzugeben, welche es ermöglicht, die dielektrischen Vorteile der Schuppenwicklung mit den ökonomischen Vorteilen der Kreuzwicklung zu kombinieren, sowie einen entsprechenden Leiterstab zu schaffen.

Die Aufgabe wird durch die Gesamtheit der Merkmale der Ansprüche 1 und 7 gelöst. Wesentlich für die Erfindung ist, dass das Isolierband bis zu einer ersten Teildicke in einer Schuppenwicklung um den Leiter gewickelt wird, und dass das Isolierband über die erste Teildicke hinaus in einem von der Schuppenwicklung abweichenden zweiten Wickelverfahren um den Leiter gewickelt wird. Hierdurch kann die unökonomische Schuppenwicklung auf einen notwendigen Teilbereich beschränkt werden, während im übrigen Bereich auf einfachere Wicklungsmethoden, wie die Kreuzwicklung, zurückgegriffen werden kann.

Eine Ausgestaltung der Erfindung zeichnet sich dadurch aus, dass das Isolierband über die erste Teildicke hinaus bis zum Erreichen der vollen Dicke d der Isolation in dem zweiten Wickelverfahren um den Leiter gewickelt wird.

Vorzugsweise wird dabei als Isolierband ein Glas/Glimmerband verwendet.

Eine andere Ausgestaltung ist dadurch gekennzeichnet, dass das Isolierband mit einer Überlappung von etwa 50% um den Leiter gewickelt wird.

Eine weitere Ausgestaltung des erfindungsgemässen Verfahrens zeichnet sich dadurch aus, dass beim zweiten Wickelverfahren das Isolierband nach Art der Kreuzwicklung bei aufeinander folgenden Wickellagen in wechselnden Richtungen um den Leiter gewickelt wird.

Als erste Teildicke wird vorzugsweise diejenige Dicke gewählt, bei der die Feldstärke an einer Kante des Leiters gleich der Nennfeldstärke auf einer Breitseite des Leiters ist.

Eine Ausgestaltung des Leiterstabes nach der Erfindung ist dadurch gekennzeichnet, dass das Isolierband ein Glas/Glimmerband ist, dass das Isolierband von der ersten Teildicke bis zur vollen Dicke d der Isolation nach Art der Kreuzwicklung in aufeinander folgenden Wickellagen in wechselnden Richtungen um den Leiter gewickelt ist, und dass die erste Teildicke diejenige Dicke ist, bei der die Feldstärke an einer Kante des Leiters gleich der Nennfeldstärke auf einer Breitseite des Leiters ist.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 in perspektivischer Darstellung den typischen Aufbau eines Leiterstabes mit rechteckigem Querschnitt, wie er der Erfindung zugrunde liegt;

Fig. 2 in der Seitenansicht das Wickelschema beim Aufbau einer Schuppenwicklung ;

Fig. 3 in der Seitenansicht das Wickelschema beim Aufbau einer Kreuzwicklung; und

Fig. 4 in einem Diagramm die Feldstärke im Kantenbereich des Leiterstabes (eingefügter Bildausschnitt) in Abhängigkeit vom Abstand (s) zur Kante für unterschiedliche Krümmungsradien der Kante bei einer Nennspannung $U_n$ von 21 kV und einer Dicke d der Isolation von 4 mm.

WEGE ZUR AUSFÜHRUNG DER ERFINDUNG

Gemäss Fig. 1 geht die Erfindung aus von einem Leiterstab 10 mit im wesentlichen rechteckigem Querschnitt und den zugehörigen Kanten 17. Der Leiterstab 10 hat einen zentralen Leiter 11 (z.B. aus Cu), der auch aus mehreren Teilleitern zusammengesetzt sein kann. Der Leiter 11 ist von einer Isolation 12 der Dicke d umgeben. Die Isolation 12 ist durch mehrlagiges Umwickeln des Leiters 11 mit einem Isolierband 13 (Fig. 2 und 3), vorzugsweise in Form eines Glas/Glimmerbandes, gebildet.

Fig. 2 zeigt schematisch eine als Schuppenwicklung bezeichnete Wickelmethode, bei der das Isolierband 13 immer in derselben Richtung fortschreitend um den Leiter gewickelt wird. Die Bandkanten aufeinander folgender Wickellagen 14 und 14' liegen dabei parallel zueinander. Die Überlappung beträgt dabei etwa 50%.

Fig. 3 zeigt schematisch eine als Kreuzwicklung bezeichnete Wickelmethode, bei der das Isolierband 13 bei aufeinander folgenden Wickellagen 15, 15' in wechselnder Richtung fortschreitend um den Leiter gewickelt wird. Die Bandkanten aufeinander folgender Wickellagen 15 und 15' kreuzen sich dabei an bestimmten Kreuzungspunkten 16, die durchaus direkt auf einer der Kanten 17 liegen können.

Gemäss der neuen Lösung werden beim Umwickeln des Leiters 11 mit dem Isolierband 13 nun die untersten Lagen bis zu einer ersten Teildicke in Schuppenwicklung ausgeführt (Fig. 2). Ab der ersten Teildicke wird auf Kreuzwicklung umgestellt (Fig. 3). Entscheidend ist der Punkt der "ersten Teildicke". Dieser sollte so gewählt sein, dass an diesem Punkt das vom Kantenabstand s abhängige elektrische Feld E(s) an der Kante 17 im zugehörigen Abstand $s_i$ von der Kante 17 gleich dem elektrischen Feld $E_n$ auf der Breitseite 18 des Leiters 11 ist. Letzteres ist gegeben durch $E_n = U_n/(d\sqrt{3})$ mit der Nennspannung $U_n$, während das Feld E an der Kante 17 als Funktion des Abstandes s von der Kante 17 (Kantenradius = $r_i$ Isolationsdicke = d) näherungsweise gegeben ist durch

$$E(s) = \frac{U_n}{\sqrt{3} \cdot (r_i + s) \cdot \ln[(r_i + d)/r_i]}$$

Die Kurven für E(s) sind in Fig 4 für $U_n$=21 kV, Isolationsdicke d=4 mm und für verschiedene Krümmungsradien der Kante 17 (Kurve a: r=0,5; Kurve b: r=1,0; Kurve c: r=1,5; und Kurve e: r=2,5) wiedergegeben. Der Kantenabstand $s_i$, bei dem E(s) = $E_n$ gilt, liegt je nach Kantenradius zwischen 1,3 und 1,7 mm.

Es ist sinnvoll, bis zu der diesem Kantenabstand $s_i$ entsprechenden Teildicke die Isolation 12 in Schuppenwicklung auszuführen. Ab dieser Teildicke ist jedoch die Schuppenwicklung absolut unnötig und es kann die günstigere Kreuzwicklung eingesetzt werden.

Als Faustregel mag gelten, dass das erste Drittel bzw. die ersten 40% der Bandlagen in Schuppenwicklung aufgebracht werden sollten, und für den Rest der Dicke die Kreuzwicklung zur Anwendung kommt.

BEZUGSZEICHENLISTE

| | |
|---|---|
| 10 | Leiterstab |
| 11 | Leiter |
| 12 | Isolation |
| 13 | Isolierband (Glas/Glimmerband) |
| 14,14' | Wickellage (Schuppenwicklung) |
| 15,15' | Wickellage (Kreuzwicklung) |
| 16 | Kreuzungspunkt |
| 17 | Kante (Leiter) |
| 18 | Breitseite (Leiter) |
| d | Dicke (Isolation) |
| E | elektr. Feldstärke |
| $E_n$ | elektr. Feldstärke auf der Breitseite des Leiters 11 |
| a,b,c,e | Kurve |
| $s,s_i$ | Abstand von der Kante 17 |

**Patentansprüche**

1. Verfahren zum Herstellen eines Leiterstabes (10) einer rotierenden elektrischen Maschine, welcher Leiterstab (10) einen von einer Isolation (12) der Dicke d umgebenen Leiter (11) mit rechteckigem Querschnitt umfasst, bei welchem Verfahren zur Ausbildung der Isolation ein Isolierband (13) in Längsrichtung fortschreitend mehrfach spiralig um den Leiter (11) gewickelt wird, **dadurch gekennzeichnet, dass** das Isolierband (13) bis zu einer ersten Teildicke in einer Schuppenwicklung um den Leiter (11) gewickelt wird, und dass das Isolierband (13) über die erste Teildicke hinaus in einem von der Schuppenwicklung abweichenden zweiten Wickelverfahren um den Leiter (11) gewickelt wird.

2. Verfahren nach Anspruch 1, **dadurch gekennzeichnet, dass** das Isolierband (13) über die erste Teildicke hinaus bis zum Erreichen der vollen Dicke d der Isolation (12) in dem zweiten Wickelverfahren um den Leiter (11) gewickelt wird.

3. Verfahren nach Anspruch 1 oder 2, **dadurch gekennzeichnet, dass** als Isolierband (13) ein Glas/Glimmerband verwendet wird.

4. Verfahren nach einem der Ansprüche 1 bis 3, **dadurch gekennzeichnet, dass** das Isolierband (13) mit einer Überlappung von etwa 50% um den Leiter (11) gewickelt wird.

5. Verfahren nach einem der Ansprüche 1 bis 4, **dadurch gekennzeichnet, dass** beim zweiten Wickelverfahren das Isolierband (13) nach Art der Kreuzwicklung bei aufeinander folgenden Wickellagen (15, 15') in wechselnden Richtungen um den Leiter (11) gewickelt wird.

6. Verfahren nach einem der Ansprüche 1 bis 5, **dadurch gekennzeichnet, dass** als erste Teildicke diejenige Dicke gewählt wird, bei der die Feldstärke (E) an einer Kante (17) des Leiters (11) gleich der Nennfeldstärke ($E_n$) auf einer Breitseite (18) des Leiters (11) ist.

7. Leiterstab (10) für eine rotierende elektrische Maschine, welcher Leiterstab (10) einen von einer Isolation (12) der Dicke d umgebenen Leiter (11) mit rechteckigem Querschnitt umfasst, wobei die Isolation mehrere Lagen eines Isolierbandes (13) umfasst, das in Längsrichtung fortschreitend mehrfach spiralig um den Leiter (11) gewickelt ist, **dadurch gekennzeichnet, dass** das Isolierband (13) bis zu einer ersten Teildicke in einer Schuppenwicklung um den Leiter (11) gewickelt ist, und dass das Isolierband (13) von der ersten Teildicke bis zur vollen Dicke d der Isolation (12) in einem von der Schuppenwicklung abweichenden zweiten Wickelverfahren um den Leiter (11) gewickelt ist.

8. Leiterstab nach Anspruch 7, **dadurch gekennzeichnet, dass** das Isolierband (13) ein Glas/Glimmerband ist.

9. Leiterstab nach Anspruch 7 oder 8, **dadurch gekennzeichnet, dass** das Isolierband (13) von der ersten Teildicke bis zur vollen Dicke d der Isolation (12) nach Art der Kreuzwicklung in aufeinander folgenden Wickellagen (15, 15') in wechselnden Richtungen um den Leiter (11) gewickelt ist.

10. Leiterstab nach einem der Ansprüche 7 bis 9, **dadurch gekennzeichnet, dass** die erste Teildicke diejenige Dicke ist, bei der die Feldstärke (E) an einer Kante (17) des Leiters (11) gleich der Nennfeldstärke ($E_n$) auf einer Breitseite (18) des Leiters (11) ist.

11. Leiterstab nach einem der Ansprüche 7 bis 9, **dadurch gekennzeichnet, dass** die erste Teildicke ein Drittel bis 40% der gesamten Dicke (d) der Isolation (12) ausmacht.

*10*

*17*

*12*

*11*   *18*

*d*

*Fig.1*

*13*

*10*

*14'*

*14*

*Fig.2*

*Fig.3*

*Fig.4*

**Europäisches**
**Patentamt**

**EUROPÄISCHER RECHERCHENBERICHT**

Nummer der Anmeldung

EP 08 10 0508

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/016665 A1 (HUDSON JEFFREY A [US]) 27. Januar 2005 (2005-01-27) * Absätze [0021] - [0026] * | 1,2,5,7, 11 | INV. H02K3/40 H02K15/10 |
| Y | | 3,4,8,9 | |
| A | | 6,10 | |
| | ----- | | |
| Y | US 6 288 341 B1 (TSUNODA TOMOYA [JP] ET AL) 11. September 2001 (2001-09-11) * Spalte 6, Zeile 37 - Zeile 45 * | 3,8,9 | |
| | ----- | | |
| Y | GB 2 406 721 A (GEN ELECTRIC [US]) 6. April 2005 (2005-04-06) * Seite 1, Zeilen 17-25 * | 4 | |
| | ----- | | |
| A | EP 0 951 132 A (ABB RESEARCH LTD [CH] ALSTOM [FR]) 20. Oktober 1999 (1999-10-20) * Zusammenfassung * | 1-11 | |
| | ----- | | |
| A | US 5 945 764 A (BENDFELD UDO [DE]) 31. August 1999 (1999-08-31) * Zusammenfassung * | 1-11 | |
| | ----- | | |

### RECHERCHIERTE SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| München | 2. Mai 2008 | Frapporti, Marc |

EPO FORM 1503 03.82 (P04C03)

**EP 1 950 866 A1**

**ANHANG ZUM EUROPÄISCHEN RECHERCHENBERICHT**
**ÜBER DIE EUROPÄISCHE PATENTANMELDUNG NR.**

EP 08 10 0508

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2008

| Im Recherchenbericht angeführtes Patentdokument | Datum der Veröffentlichung | Mitglied(er) der Patentfamilie | Datum der Veröffentlichung |
|---|---|---|---|
| US 2005016665 A1 | 27-01-2005 | KEINE | |
| US 6288341 B1 | 11-09-2001 | KEINE | |
| GB 2406721 A | 06-04-2005 | CN 1604431 A | 06-04-2005 |
| | | DE 102004047716 A1 | 21-04-2005 |
| | | JP 2005117891 A | 28-04-2005 |
| | | US 2005072592 A1 | 07-04-2005 |
| | | US 2005204543 A1 | 22-09-2005 |
| EP 0951132 A | 20-10-1999 | AT 361577 T | 15-05-2007 |
| | | CN 1233101 A | 27-10-1999 |
| | | DE 19817287 A1 | 21-10-1999 |
| | | JP 3955696 B2 | 08-08-2007 |
| | | JP 11332154 A | 30-11-1999 |
| | | US 6404092 B1 | 11-06-2002 |
| US 5945764 A | 31-08-1999 | KEINE | |

EPO FORM P0461

Für nähere Einzelheiten zu diesem Anhang : siehe Amtsblatt des Europäischen Patentamts, Nr.12/82

8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19811370 A1
- EP 1319266 B1